# EUROPEAN PATENT APPLICATION

(11) **EP 2 525 630 A1**
(43) Date of publication of application: **21.11.2012**
(21) Application number: 11732952.4
(22) Date of filing: 14.01.2011
(51) Int. Cl.: H05B 37/02

(54) **ILLUMINATION APPARATUS**

(30) Priority: 15.01.2010 JP 2010006783
(71) Applicant: Optoworld Co., Ltd., Tokyo 121-0801 (JP)
(72) Inventor: AGO, Kazufusa, Tokyo 121-0801 (JP); TSUJI, Katsunari, Tokyo 121-0801 (JP); IMAI, Yuji, Asaka-shi, Saitama 351-0011 (JP)
(74) Representative: Müller Schupfner & Partner
(86) International application number: PCT/JP2011/050530
(87) International publication number: WO 2011/087082

(57) **Abstract**

The present invention allows flexible reinstallation of a region capable of communicating with a wireless LAN and a master and a repeater of a wireless LAN in conformity with a site to install an illumination system. Therefore, the present invention is an illumination system including an illumination unit using a device emitting a light by having a direct current power supplied thereto. The illumination system of the present invention includes: a general purpose terminal allowing to be connected to a communication system capable of communicating with an external device spaced apart from the illumination system, the terminal also capable of supplying an electric power to the communication system; and a conversion unit supplying the direct current power applied to the illumination unit to the general purpose terminal by converting the power to be used in the communication system.

## Description

### TECHNICAL FIELD

The present invention relates to an illumination system using a device emitting a light by a direct current power, and more particularly, relates to a communication system attached to an illumination system or a connection device capable of connecting with the communication system.

### BACKGROUND ART

Illumination systems using a device emitting a light by supplying a direct current power, such as a light emitting diode and a laser diode, to a light source are used increasingly due to their long life, compact size, and low power consumption compared with an illumination light source, such as an incandescent bulb and a fluorescent lamp. Light emitting diodes does not require preheating, are quick in response speed, are enabled to control lighting up and out and control modulation in the amount of luminescent by controlling a power source, and generate less noise for emitting a light by a direct current power source, so that they are suitable for transmission of a communication signal. Therefore, it is proposed to utilize a light source of an illumination light directly as a signal source (for example, refer to Patent Document 1).

It is also proposed to communicate by modulating a visible light for illumination, and separately, to use an infrared LED (light emitting diode) for communication by modulating it while a visible light is lit out (for example, refer to Patent Documents 2 and 3). Patent Document 2 also proposes to supply a power to a visible light LED in an illumination unit while illumination is lit up and to supply a power to an infrared LED while illumination is lit out.

In addition, as means for electrically transmitting a communication signal to an illumination system, it is proposed to send a data signal to an external device in combination with an infrared transmitter using an interface for PLC (power line communication) effectively utilizing power line facilities and a PLC modem and to send and receive a data signal to and from an external device in combination with a host unit of a wireless LAN (local area network) (for example, refer to Patent Document 4).

It is still also proposed to provide a visible light LED illumination unit with a communication data sending unit and a light receiving unit and connect it to a personal computer or the like to configure an optical wireless LAN with a slave having an infrared light sending unit and a light receiving unit(for example, Patent Document 5).

### PRIOR ART DOCUMENTS

### Patent Documents

Patent Document 1: Japanese Patent Application Kokai Publication No. 2004-221747
Patent Document 2: Japanese Patent Application Kokai Publication No. 2004-282389
Patent Document 3: Japanese Patent Application Kokai Publication No. 2008-92303
Patent Document 4: Japanese Patent Application Kokai Publication No. 2008-282588
Patent Document 5: Japanese Patent Application Kokai Publication No. 2009-225196

In a communication system provided in a conventional illumination system, a sending unit directly modulating an LED light source for illumination for output and a light receiving unit used to be installed fixedly or an infrared sending unit supplied an electric power directly or by switching for the illumination system used to be fixedly installed in the illumination system.

However, when a wireless LAN or an optical wireless LAN is installed in a business establishment having a large area, such as a factory and business premises, a range of allowing good communication between one master and a plurality of slaves varies due to the presence of a partition, a rack, a desk, machinery, and the like and their arrangement. This is also same when providing a wireless LAN or an optical wireless LAN in an LED illumination system, and the range capable of communicating with a wireless LAN or an optical wireless LAN varies due to a plurality of conditions, such as the height to mount the illumination system on site and the presence of facilities/partitions and the like to disturb communication, for example. In addition, the range capable of communicating with a wireless LAN or an optical wireless LAN also varies due to remodeling, rearrangement, or the like in the room.

That is, a master of a wireless LAN used not to be allowed to be installed while checking the region capable of communicating with the wireless LAN on site to adapt to it. Therefore, when installing LED illumination and a wireless LAN in a business establishment having a large area, for example, a master of a wireless LAN is required to be installed for each range narrower than an assumed communication range of a wireless LAN, and thus facility costs and construction costs of the masters increase. Even when there is a region not allowing a wireless signal from a master to be received due to rearrangement or the like, a master used not to be easily installed in addition.

In a case of PLC, although there is a possibility of utilizing a power supply line to the LED illumination, LAN wiring is also possible when wiring a power line in a wall, and also PLC is sensitive to a noise of a power supply device or leakage of an electromagnetic wave and the communication speed decreases particularly when many plugs are put in an outlet and is seriously slowed down from a theoretical communication speed, so that there is little possibility of obtaining a sufficient communication speed or convenience, even when using PLC for communication from LED illumination to an external device instead of the above wireless communication, and it becomes rather inconvenient compared with a wireless system.

### DISCLOSURE OF THE INVENTION

With that, to solve the above problems, it is an object of the present invention to provide an illumination system capable of setting a region capable of communicating with a wireless LAN in conformity with a site to install the illumination system or of flexibly performing reinstallation of a master or a repeater of a wireless LAN dealing with rearrangement of machinery on site or change in region.

To solve the above problems, one embodiment of an illumination system according to the present invention is an illumination system, including an illumination unit using a device emitting a light by having a direct current power supplied thereto, wherein the illumination system includes at least: a general purpose terminal allowing to be connected to a communication system capable of communicating with an external device spaced apart from the illumination system, the terminal also capable of supplying an electric power to the communication system; and a conversion unit supplying the direct current power applied to the illumination unit to the general purpose terminal by converting the power to be used in the communication system.

### BRIEF DESCRIPTION OF THE DRAWINGS

Fig. 1 is a block diagram illustrating an illumination system according to First Embodiment of the present invention together with peripheral equipment thereof.
Fig. 2 is a block diagram illustrating an illumination system according to Second Embodiment of the present invention together with peripheral equipment thereof.
Fig. 3 is a block diagram illustrating an illumination system according to Third Embodiment of the present invention together with peripheral equipment thereof.
Fig. 4 is a block diagram illustrating an illumination system according to Fourth Embodiment of the present invention together with peripheral equipment thereof.
Fig. 5A is a block diagram illustrating inside of the illumination system according to First Embodiment of the present invention, and Fig. 5B is a block diagram illustrating inside of the illumination system according to Second Embodiment of the present invention.
Fig. 6A is a block diagram illustrating inside of the illumination system according to Third Embodiment of the present invention, and Fig. 6B is a block diagram illustrating inside of an illumination system according to Fourth Embodiment of the present invention.
Fig. 7A is an internal block diagram of an illumination system in a case, as an application, of building in a wireless LAN communication unit for a wireless router and a wireless LAN communication unit for an external device respectively, and Fig. 7B is an internal block diagram of an illumination system in a case, as an application, of building in a communication connection unit for a general purpose connection terminal of the illumination system and a wireless LAN communication unit for an external device respectively.

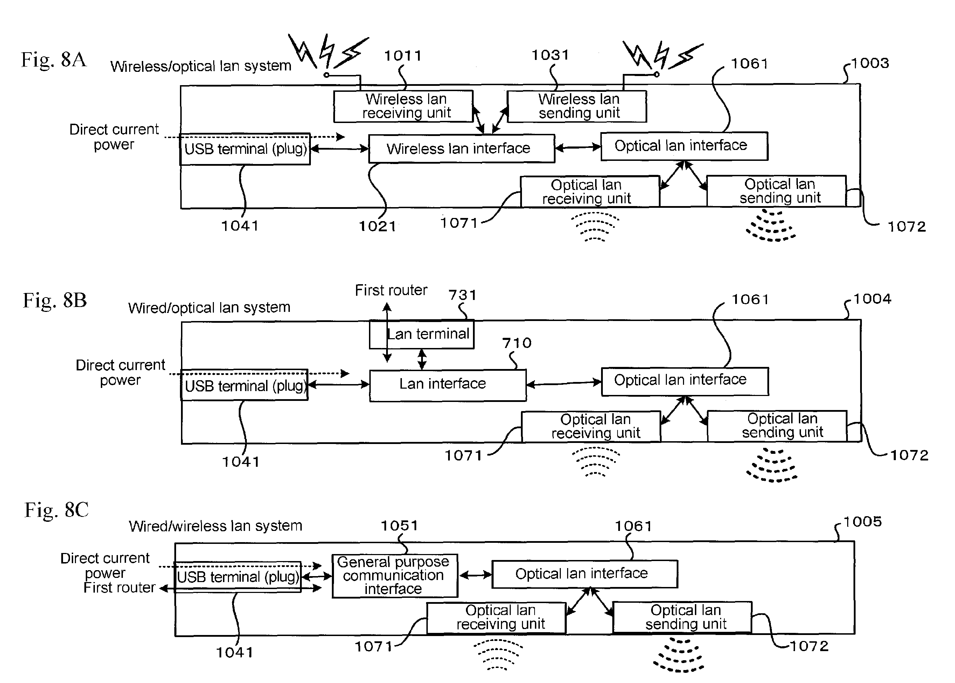

Fig. 8A is an internal block diagram of an illumination system in a case, as an application, of building in a wireless LAN communication unit for a wireless router and an optical wireless LAN communication unit for an external device respectively, Fig. 8B is an internal block diagram of an illumination system in a case, as an application, of building in a communication connection unit for a wired router and an optical wireless LAN communication unit for an external device respectively, and Fig. 8C is an internal block diagram of an illumination system in a case, as an application, of building in a communication connection unit for a general purpose connection terminal of the illumination system and an optical wireless LAN communication unit for an external device respectively.
Fig. 9 is a block diagram illustrating a conventional illumination system and a wireless LAN system together with peripheral equipment thereof for comparison.

### DETAILED DESCRIPTION OF THE INVENTION

### Overall Description

(1) To solve the above problems, an illumination system according to the present invention includes an illumination unit using a device emitting a light by having a direct current power supplied thereto, wherein the illumination system includes at least: a general purpose terminal allowing to be connected to a communication system capable of communicating with an external device spaced apart from the illumination system, the terminal also capable of supplying an electric power to the communication system; and a conversion unit supplying the direct current power applied to the illumination unit to the general purpose terminal by converting the power to be used in the communication system.
The illumination system of the present mode allows installation of a master or a relay unit of a wireless LAN while checking a region capable of communicating with the wireless LAN on site to adapt to it and facilitates attachment and detachment of a wireless communication system.

(2) Preferably in the illumination system according to the present invention, the communication system may also be configured at least to be capable of communicating by a power within a suppliable specified power value defined with respect to the general purpose terminal.
According to the communication system of the illumination system of the present mode, the need for an additional power supply unit and wiring thereof for a power supply for communication can be eliminated, manufacture is facilitated, and the costs can be decreased.

(3) Preferably in the illumination system according to the present invention, the communication system may also include a communication interface converting a communication signal to allow communication with the external device provided with a communication system for a LAN (local area network) spaced apart from the illumination system.
According to the communication system of the illumination system of the present mode, it is enabled to communicate with an external device spaced apart therefrom.

(4) Preferably in the illumination system according to the present invention, the communication system may also include a communication interface converting a communication signal to allow communication with a LAN router.
According to the communication system of the illumination system of the present mode, it is enabled to communicate with another device LAN connected via a LAN router.

(5) Preferably in the illumination system according to the present invention, the communication system may also include a communication interface converting a communication signal to allow communication with both a communication system for a LAN provided in the external device spaced apart from the illumination system and a LAN router.
According to the communication system of the illumination system of the present mode, it is enabled to communicate not only with the external device spaced apart therefrom but also with another device LAN connected via a LAN router.

(6) Preferably in the illumination system according to the present invention, the communication interface may also convert the communication signal to allow communication with a communication system for a wireless LAN.
According to the communication interface of the illumination system of the present mode, it is enabled to connect with a wireless LAN, so that the need for the wiring can be eliminated, installation of the devices connected to a LAN can be facilitated, and removal and rearrangement of the devices can be facilitated.

(7) Preferably in the illumination system according to the present invention, the communication interface may also convert the communication signal to allow communication with a communication system for an optical wireless LAN.
According to the communication interface of the illumination system of the present mode, it is enabled to connect with an optical wireless LAN, so that the need for the wiring can be eliminated, installation of the devices connected to a LAN can be facilitated, and removal and rearrangement of the devices can be facilitated.

(8) Preferably in the illumination system according to the present invention, the LAN router may also be a wireless LAN router, and the communication interface may also be capable of communicating with a wireless LAN router.

According to the LAN router of the illumination system of the present mode, it is enabled to be connected to a wireless LAN router, so that the need for the wiring to the router can be eliminated, installation of the illumination system can be facilitated, and removal and rearrangement of a device LAN connected to the illumination system can be facilitated.

(9) Preferably in the illumination system according to the present invention, the LAN router may also be a wired LAN router, and the communication interface may also be capable of communicating with a wired LAN router.
According to the LAN router of the illumination system of the present mode, it is enabled to be connected to a wired LAN router, so that secure connection can be made, and even when being moved or rearranged, the communication speed of a LAN or the like can be unvaried.

(10) Preferably in the illumination system according to the present invention, the general purpose terminal may also be a LAN terminal or a USB terminal.
According to the general purpose terminal of the illumination system of the present mode, it is enabled not only to send and receive a communication signal to and from the external device but also to supply an electric power to the connected communication system.

(11) Preferably in the illumination system according to the present invention, the illumination system may further include: a first supply unit of the direct current power to the illumination unit; a first wiring material conductively connecting the first supply unit and the illumination unit; a second supply unit of the direct current power supplying a power to the general purpose terminal by being connected closer to a source of a power supply than an ON/OFF switch for a power to the illumination unit; and a second wiring material conductively connecting the second supply unit with the conversion unit and the general purpose terminal.
According to the illumination system of the present mode, regardless of turning ON/OFF of the power supply path for illumination, it is enabled to supply a stable power to the communication system.

### Effects of the Invention

According to an illumination system of the present invention, it is possible to provide an illumination system allowing installation of a master of a wireless LAN while checking a region capable of communicating with the wireless LAN on site to adapt to it and using a direct current light emitting device easily attached to and detached from a wireless communication system.

### Description on Illustrated Embodiments

Firstly, a case of allowing power supply from a general purpose terminal to a device connected to the general purpose terminal is described. As a general purpose terminal capable of power supply, LAN terminals and USB (universal serial bus) terminals are well known. For example, in a case of a LAN terminal, the PoE (power over Ethernet (registered trademark)) function enabling a power supply to a LAN peripheral device via a LAN cable and a LAN terminal is standardized as IEEE 802.3af-2003 and a receiving adapter for it is known. In IEEE 802.3af, power is supplied using two pairs (four conductors) of a copper wire having four pairs of totally eight conductors, two conductors each for a pair, patterns of copper wires in a supplying device and a supplied device are determined.

As specifications related to the power source for a LAN terminal, it is determined that, for example, a supplying device can supply the power at a maximum of DC 48 V/ maximum of 15.4 W, a supplied device can use at a maximum of 12.95 W, and a connector is an eight position modular jack. The current supply amount specification becomes approximately 0.32 A from the specified maximum power value / specified maximum voltage value. According to IEEE 802.3at, power supply of approximately from 25 W to 35W can be supplied/received, which is approximately twice as much as IEEE 802.3af.

In a case of a USB terminal, a USB bus power function enabling a power supply to a USB peripheral device via a USB cable and a USB terminal has its specifications developed and managed under the USB-IF (USB Implementers Forum, Inc.), and the power supply capability of the USB bus power function is limited to 500 mA (5 V) in USB 2.0 and to a maximum of 900 mA in USB 3.0, so that the power supply capability is not high while it is excellent in convenience and is most used for connection of peripheral devices.

A wireless LAN system enables LAN communication wirelessly between a master and (one or more) slaves that are spatially spaced apart. As a slave of a wireless LAN, a wireless LAN adapter of a CardBus connection type connecting with a PC card slot (CardBus: PCMCIA), which is a uniform standard of an expansion card for, for example, a laptop personal computer and a wireless LAN adapter of a USB connection type connecting with a USB terminal of, for example, a personal computer are known. A slave of a wireless LAN can be LAN connected to a master using one of a communication protocol (IEEE 802.11 a/b/g or the like) compatible with the master of the wireless LAN. There are 5 v driven type and 3.3 v driven type of PC cards, and the corresponding voltage is supplied from the PC card slot to the card.

### <First Embodiment>

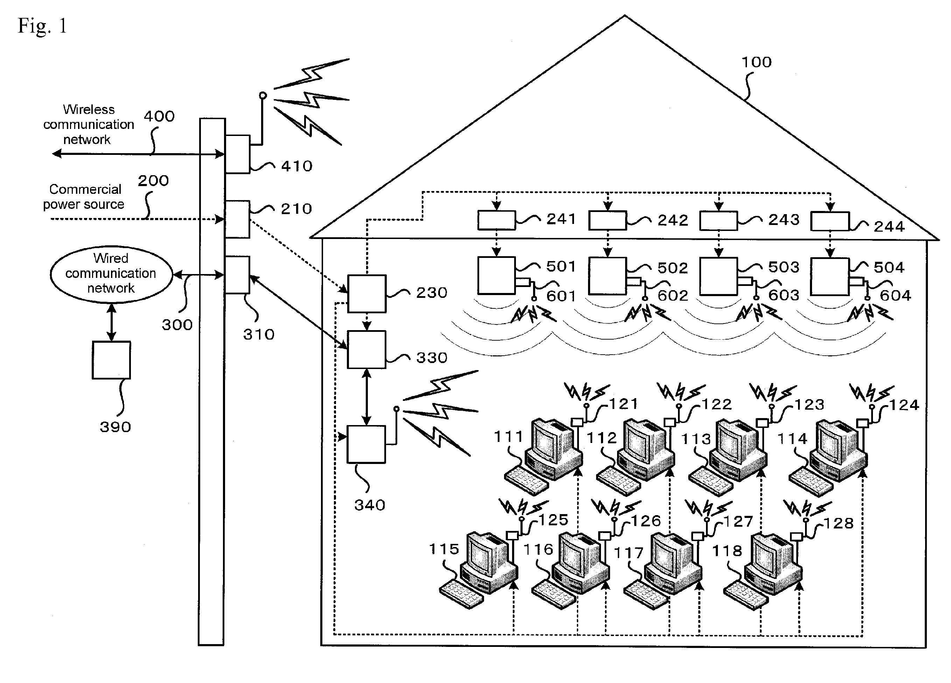

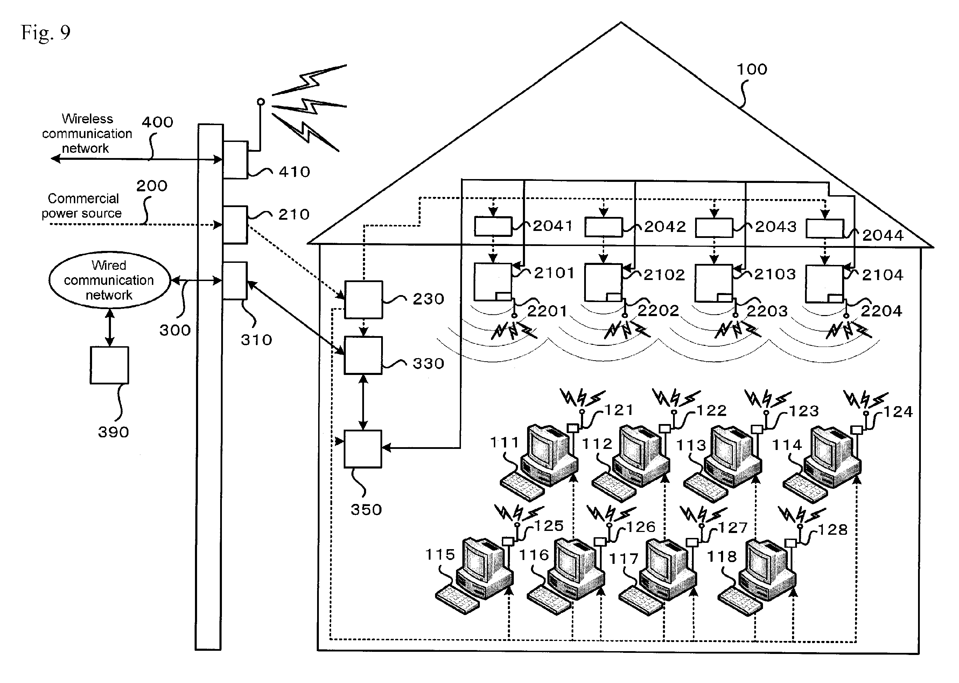

First Embodiment of an illumination system of the present invention is a case of a detachable communication unit of an illumination system wirelessly communicating with a router or an external device in a building. The term "external" of the external device means outside spaced apart from the illumination system, which is inside relative to the building. A description is given below to the illumination system of First Embodiment using Figs. 1, 5A, 5B, 7A, 7B, and 8A, and further Fig. 9 of a conventional technique for comparison.

### (Regarding Power Source)

Illumination systems 501 through 504 of First Embodiment are installed on a ceiling or an upper wall in a building 100. The building 100 may be a small scale building, such as a house and an office, while it is preferably a factory or business premises having a large area and many illumination systems 501 through 504 installed therein. To the building 100, an electric power is supplied from a commercial power line 200 through a pole transformer 210 to a panelboard 230 in a room. From the panelboard 230, the electric power is supplied at AC 100 V, AC 200 V, or the like to the respective illumination systems 501 through 504 in the building 100 and respective external devices 111 through 118 in the building 100. The power for each of the illumination systems 501 through 504 is supplied via direct current power units 241 through 244.

The illumination systems 501 through 504 are connected to the direct current power units 241 through 244. The direct current power units 241 through 244 are arranged in a ceiling plenum or the like of the building 100 and supply the power suitable for lighting up illumination units 510 in the illumination systems 501 through 504 out of the power at AC 100 V, AC 200 V, or the like. When the illumination unit 510 is an LED illumination system, the direct current power units 241 through 244 supply 100 V of an alternate current of a commercial power source by converting it into a direct current at a voltage value and a current value suitable for lighting up the LED illumination system.

As an alternate current-direct current conversion circuit (AC-DC converter), such as the direct current power units 241 through 244, there are (A) a method of using a transformer and a rectifying and smoothing circuit, (B) a method of using a series regulator, and (C) a method of using a switching power source, and from the perspective of not basically generating a high frequency noise of switching and the like, (A) and (B) are preferred. Even the switching power source system of (C) can be used as long as it is an AC-DC converter sufficiently suppressing a noise component affecting the communication.

As the direct current power units 241 through 244, a constant current circuit is preferred capable of efficiently lighting up an LED because it can suppress heat loss and can reduce variation in voltage and influence due to change in temperature. Particularly in a case of high brightness (high power), a constant current circuit becomes essential. While each of the illumination systems 501 through 504 is provided separately with the direct current power units 241 through 244 in Fig. 1, the direct current power units 241 through 244 may also be collected into one, two, or the like.

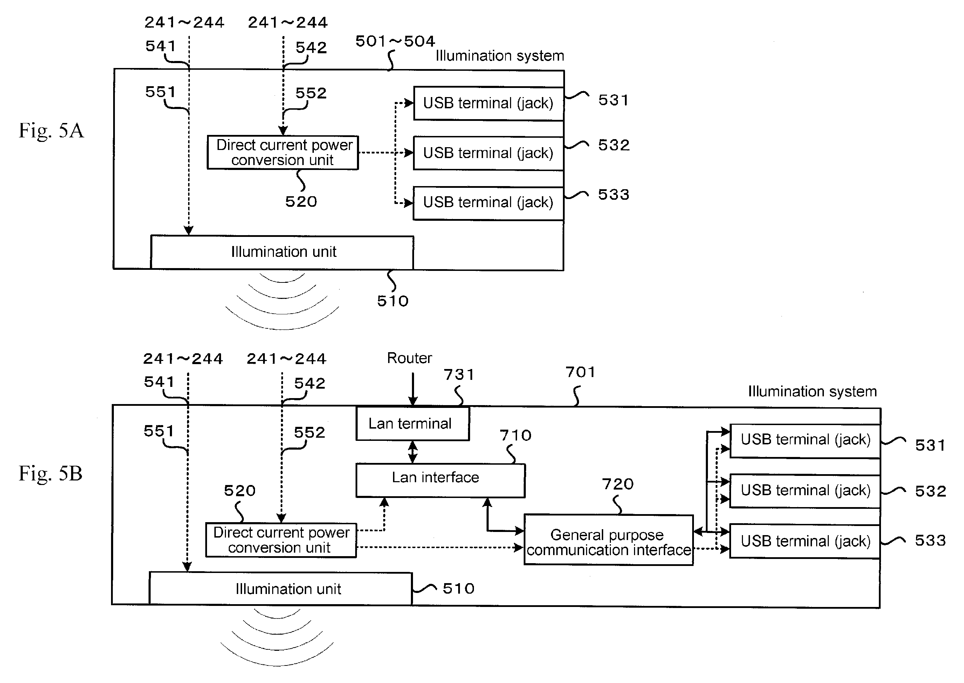

When ON/OFF switches for lighting up/out are provided only in main bodies of the illumination systems 501 through 504, a power supply to communication systems 601 through 604 can be secured even while lit out as long as the power supply path from the direct current power units 241 through 244 to general purpose terminals 531 through 533 is made independent of the power supply path from the direct current power units 241 through 244 to the illumination units 510. The general purpose terminals 531 through 533 do not have to be in plural as illustrated in Fig. 5A and may be one or more.

When the ON/OFF switches for lighting up/out are provided exposed from the wall in the middle of wiring in the wall separately from the main bodies of the illumination systems 501 through 504, a first power supply path to the illumination systems 501 through 504 is firstly connected from the panelboard 230 through the ON/OFF switches in the wall to the direct current power units 241 through 244, and further is connected, from the direct current power units 241 through 244 via a first supply unit 541 of a direct current power in each of the illumination systems 501 through 504, by a first wiring material 551 conductively connecting a first supply unit 541 and the illumination unit 510.

Meanwhile, in the power supply path to the general purpose terminals 531 through 533, the wiring from the panelboard 230 to the direct current power units 241 through 244 has an independent line connected at least closer to the source of power supply than the ON/OFF switches in the wall and is connected, from the direct current power units 241 through 244 via a second supply unit 542 of a direct current power in the general purpose terminals 531 through 533, by a second wiring material 552 conductively connecting the second supply unit 542 and the general purpose terminals 531 through 533. This enables to supply a stable power to the communication systems regardless of ON/OFF of the power supply path for illumination.

### (Regarding Communication Line)

In the building 100, a communication line 300, such as a telephone line, is led in to line terminating equipment 330 in the room through a pole device 310 and the like. The communication line 300 may be any of a regular telephone line, an ADSL (asymmetric digital subscriber line), and an optical line as long as it can carry digital transmission, while an optical line is preferred when the amount of transmission is large and when a fast transmission speed is required. The communication line 300 is connected to a communication network, such as the Internet, and can communicate with a remote server or another terminal unit 390 via the network. A terminator 330 is connected to each of the external devices 111 through 118 in the building 100 with the LAN wiring via a splitter, a modem, a router (first router) / hub, and the like, not shown.

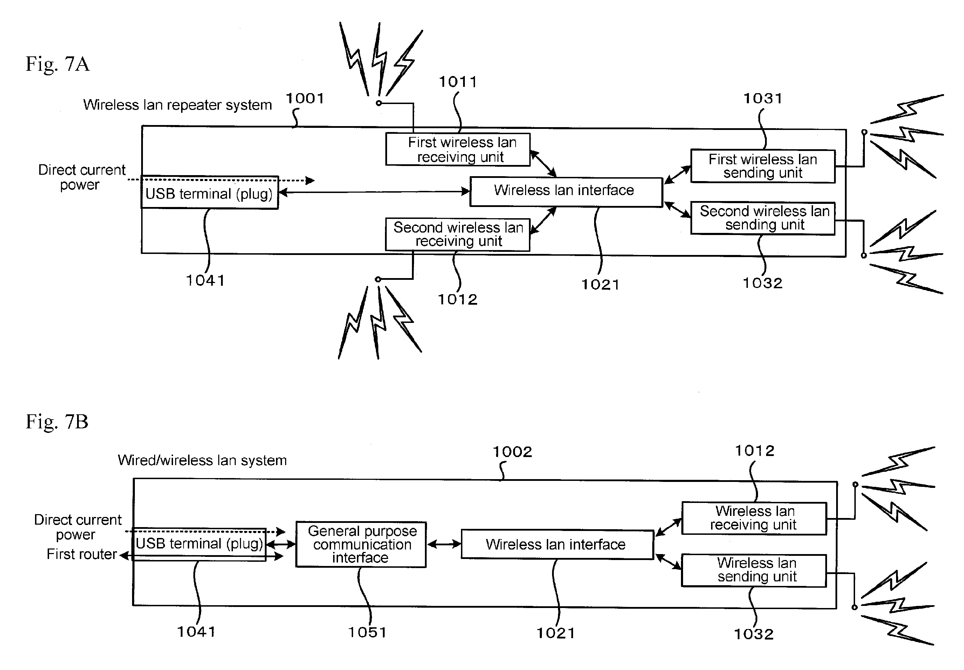

In the present embodiment, the first router having the communication line 300 led in to the line terminating equipment 330 in the room in the building 100 is a wireless router 340, and is wirelessly connected to the communication systems 601 through 604 connected to the general purpose terminals 5of the respective illumination systems 501 through 504. The communication systems 601 through 604 in this case are wireless LAN repeater systems as in Fig. 7A. This enables to eliminate the need for wired wiring for a LAN from the illumination systems 501 through 504 to a router 340. Accordingly, installation of the illumination systems 501 through 504 can be facilitated. When each of the external devices 111 through 118 LAN connected to the illumination systems 501 through 504 is moved or rearranged, whether or not to connect wireless LAN communication can easily be set only by arranging the communication systems 601 through 604 in the illumination systems 501 through 504. When, for example, enlarging the region allowing coverage by a wireless LAN while the number of communication lines may also be few, the communication systems 601 through 604 may be arranged as needed in the area intended to be enlarged, and thus it is possible to set a wireless LAN region of effective facility investment.

Instead of the telephone line, the optical line, or the like, a network 400 for PHS or mobile phones may also be utilized to be wirelessly connected for communication between a base station 410 thereof and the communication systems 601 through 604 connected to the general purpose terminals of the respective illumination systems 501 through 504. In that case, the wireless router 340 and the like generally becomes not required, while the wireless router 340 or the like may also be arranged to eliminate a dead zone of communication connection in a place of easily catching a radio wave from outdoors in a case of a building of poor radio wave transparency, for example.

Although the communication systems 601 through 604 are connected to all the general purpose terminals (USB terminals) 531 through 533 in the illumination systems 501 through 504 in Fig. 1, it is not required to connect the communication systems 601 through 604 to all of the illumination systems 501 through 504 because a master of a wireless LAN may be installed in each range narrower than an actual communication range of the wireless LAN. By checking the communication range of the wireless LAN in a local situation, the communication systems 601 through 604 may be connected only to the illumination systems 501 through 504 near the edges of the securely communicable region. In such a manner, the facility costs and the construction costs for masters can be suppressed, and when there is a region not allowing a wireless signal from a master to be received due to rearrangement or the like, a master can easily be installed in addition.

When, for example, LAN communication systems 121 through 128 on the side of the respective external devices 111 through 118 are modified from a wireless system to an optical wireless system, all it takes is only to change the communication systems 601 through 604 connected to the general purpose terminals (USB terminals) 531 through 533 in the illumination systems 501 through 504 from the wireless type on both sides as in Fig. 7A to an optical wireless type on the side of the external devices 111 through 118 while the first router 340 side may remain wireless as in Fig. 8A. Processing at that time may only be to replace each communication system with the general purpose terminals (USB terminals) 531 through 533 and is very easy. In addition, regarding the communication systems 601 through 604, when the communication speed or the stability becomes insecure when the first router side is connected wirelessly or when it becomes insecure due to rearrangement or the like, the first router side can simply be wire connected only by replacing them with the communication systems 601 through 604 as in Fig. 7B.

As described above, each illumination unit 510 for each of the illumination systems 501 through 504 uses an LED device emitting a light by having a direct current power supplied from the direct current power units 241 through 244. Since the LED device is driven by a direct current, it is possible not to generate a noise.

The respective illumination systems 501 through 504 have jack sides 531 through 533 of the USB terminals as the general purpose terminals. Each of the USB terminals 531 through 533 allows connecting a USB terminal 1041 of each of the communication systems 601 through 604. Each of the USB terminals 531 through 533 is capable of supplying an electric power to each of the communication systems 601 through 604 via the USB terminal 1041.

Since each of the USB terminals 531 through 533 is a general purpose terminal, each of the communication systems 601 through 604 is easily attached and detached. Therefore, whether or not to mount the communication systems 601 through 604 as the master side or a relay unit (repeater) of the wireless LAN to the respective USB terminals 531 through 533 can be determined, while checking the communication status and the region capable of communicating with a wireless LAN on site of the installation of the respective illumination systems 501 through 504, to adapt to it. In addition, every time of rearrangement or the like in the room, whether or not to mount the wireless communication systems 601 through 604 can be determined while checking the communication status on site.

A conversion unit 520 in each of the illumination systems 501 through 504 is a DC-DC converter converting the direct current power applied to the illumination unit 510 to a power (voltage value) that can be used in the communication systems 601 through 604, and supplying a power defined for each of the USB terminals 531 through 533. This enables the communication systems 601 through 604 connected to the respective USB terminals 531 through 533 to communicate with the external devices 111 through 118.

The external devices 111 through 118 are arranged in a position below the illumination systems 501 through 504 and spaced apart from the illumination systems 501 through 504.

The communication systems 601 through 604 have a configuration capable of communicating with the external devices 111 through 118 and have the plug sides 1041 of the USB terminals. The communication systems 601 through 604 are configured to be capable of communicating at a power within a suppliable specified power value defined for the respective USB terminals 531 through 533. This enables to eliminate the need for an additional power supply unit and wiring thereof for power supply for communication of the communication systems 601 through 604, to facilitate the manufacture, and to decrease the costs.

The communication systems 601 through 604 in the present embodiment have interfaces 1021 for LAN communication converting a communication signal to allow communication with the external devices 111 through 118. The external devices 111 through 118 are spaced apart from the illumination systems 501 through 504 and are provided with the communication systems for a wireless LAN. Accordingly, the communication systems 601 through 604 are capable of communicating with the external devices 111 through 118 spaced apart therefrom.

A wireless LAN repeater system 1001 in Fig. 7A has a communication interface 1021 converting a communication signal to allow communication with the communication systems for a wireless LAN. This enables wireless LAN connection, so that the need for the wiring can be eliminated, installation of the devices connected to a LAN can be facilitated and removal and rearrangement of the devices can be facilitated.

The USB terminal 1041 can receive a direct current power from the illumination systems 501 through 504. This power drives a communication LAN interface 1021, a first wireless LAN receiving unit 1011, a first wireless LAN sending unit 1031, a second wireless LAN receiving unit 1012, and a second wireless LAN sending unit 1032. The first wireless LAN receiving unit 1011 and the first wireless LAN sending unit 1031 are a receiving unit and a sending unit for communicating with the wireless LAN router 340, and the second wireless LAN receiving unit 1012 and the second wireless LAN sending unit 1032 are those for communicating with the external devices 111 through 118.

The communication interface 1021 of a wired/wireless LAN system 1002 in Fig. 7B can not only wirelessly communicate with the external devices 111 through 118 but also convert a communication signal to become capable of wired communication via the illumination systems in Fig. 5B. This enables the communication systems 601 through 604 connected to the respective illumination systems 501 through 504 to communicate with another device LAN connected via the LAN router 340.

The USB terminal 1041 can receive a direct current power from the illumination systems 501 through 504 and also connect to allow communication with the wired LAN router 340. This power drives a general purpose interface 1051, the communication LAN interface 1021, the second wireless LAN receiving unit 1012, and the second wireless LAN sending unit 1032. The general purpose interface 1051 communicates with a wired LAN router 350, and the second wireless LAN receiving unit 1012 and the second wireless LAN sending unit 1032 are a receiving unit and a sending unit for communication with the external devices 111 through 118.

The communication interface 1021 of the present embodiment in Fig. 7B can convert a communication signal, as a modification, to allow communication with both the communication systems for a wireless LAN provided in the external devices 111 through 118 spaced apart from the respective illumination systems 501 through 504 and the wired LAN router 340 via the illumination systems in Fig. 5B by providing, instead of the general purpose communication interface 1051, a LAN interface 710 and a LAN terminal 731 as in Fig. 8B. This enables to communicate with not only the external devices 111 through 118 spaced apart therefrom but also another device LAN connected via the LAN router 340.

A wireless/optical LAN system 1003 in Fig. 8A has a communication interface 1061 capable of converting a communication signal to allow communication with the communication systems for an optical wireless LAN provided in the external devices 111 through 118 spaced apart therefrom. Generally, an optical wireless LAN can communicate information more than a wireless LAN. This enables optical wireless LAN connection, so that more information can be communicated, the need for the wiring can be eliminated, installation of the devices connected to a LAN can be facilitated, and removal and rearrangement of the devices can be facilitated.

When the first router 340 of the LAN is a wireless LAN router, those capable of communicating with the first wireless LAN router 340 in the communication interface 1021 are selected as, for example, the communication systems 601 through 604 as illustrated in Figs. 7A and 8A to be connected to the general purpose terminals 531 through 533 in the illumination systems 501 through 504.

In contrast to the above illumination systems 501 through 504 in the present embodiment, conventional illumination systems 2101 through 2104 illustrated in Fig. 9 do not allow attachment and detachment of respective communication systems 2201 through 2204. Once the illumination systems 2101 through 2104 are installed, modification in the specification or the communication region of the wireless LAN requires replacement of the illumination systems 2101 through 2104 themselves, requires electrical work, and used to have problems of costs for replacing the illumination systems, inconvenience for not allowed to use the LAN during the work, and the like.

That is, in the illumination systems 2101 through 2104 in Fig. 9, the respective fixed communication systems 2201 through 2204 are masters, so that they cannot be installed flexibly in conformity with the situation on site, and accordingly, cannot deal with rearrangement or the like and thus it used not to be capable of processing to improve the sensitivity, even when there is a dead zone, to deal with it.

The illumination systems 501 through 504 in the present embodiment can thus set a region capable of communicating with a wireless LAN in conformity with a site to install the illumination systems and flexibly perform reinstallation of a master or a repeater of a wireless LAN corresponding to rearrangement or change in region of machinery on site and the like.

### <Second Embodiment>

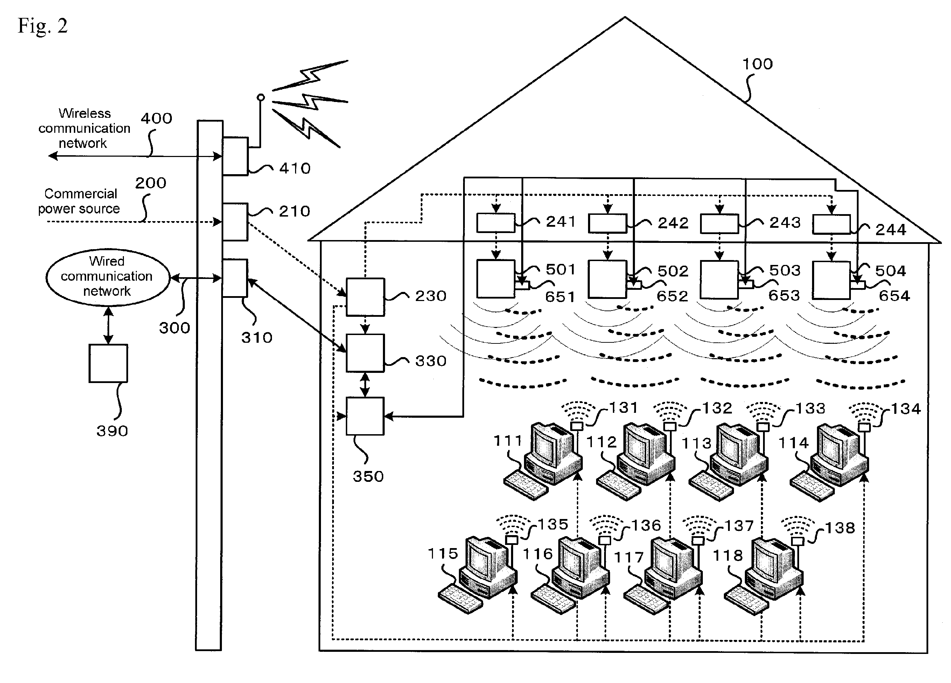

Second Embodiment of an illumination system of the present invention is a case of wired communication of a detachable communication unit of an illumination system with a router and further optical wireless communication with an external device in a building. A description is given below to an illumination system of Second Embodiment using Figs. 2 and 8B. Same reference numerals are assigned to the configurations in the drawings similar to those in First Embodiment to omit repetitive descriptions.

In Second Embodiment illustrated in Fig. 2, a first router 350 of a LAN is a wired LAN router, and those capable of communicating with the first wired LAN router 340 in the LAN interface 710 of a wired/optical LAN system 1004 as, for example, illustrated in Fig. 8B are selected as communication systems 651 through 654 to be connected to the general purpose terminals 531 through 533 in the illumination systems 501 through 504.

In Second Embodiment, communication with the external devices 111 through 118 spaced apart therefrom is an optical wireless system, and LAN communication systems 131 through 138 on the side of the respective external devices 111 through 118 are also in an optical wireless system. Other configurations are same as those in First Embodiment. This enables connection with the wired LAN router 350 in addition to setting of an optical wireless LAN communicable region of in conformity with the site to install the illumination systems and flexible reinstallation of a master or a repeater of an optical wireless LAN corresponding to rearrangement or change in region of machinery on site and the like, so that secure connection becomes possible even in a noisy condition causing wireless LAN connection unstable and communication of a lot of information is enabled, and the communication speed of a LAN or the like can be unvaried even when moved or rearranged.

### <Third Embodiment>

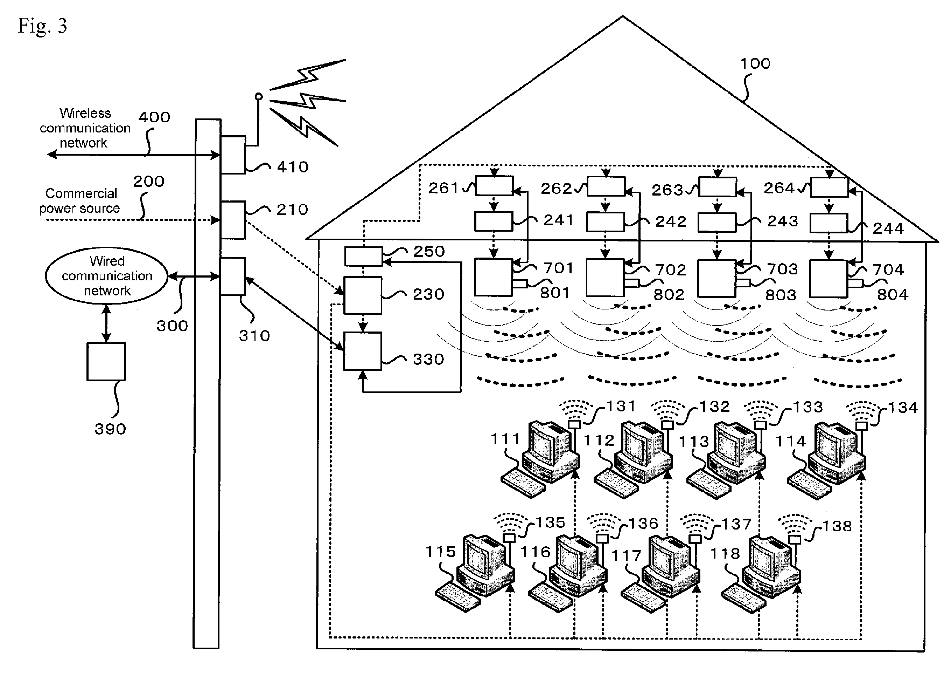

Third Embodiment of an illumination system of the present invention is a case of communication of a detachable communication unit of an illumination system with a router of PLC system utilizing a lamp line. A description is given below to an illumination system of Third Embodiment using Figs. 3 and 8C. Same reference numerals are assigned to the configurations in the drawings similar to those in First through Second Embodiments to omit repetitive descriptions.

In Third Embodiment illustrated in Fig. 3, a communication signal of a wired LAN is superimposed on a lamp line by a PLC adapter 250 connected to the line terminating equipment 330 of the communication line 300, and the communication signal of the wired LAN is extracted from the lamp line by PLC adapters (PLC modems) 261 through 264 connected to the direct current power units 241 through 244 to be inputted to illumination systems 701 through 704.

The communication signal entered into the illumination systems 701 through 704 reaches the USB terminals 531 through 533 from, for example, the LAN terminal 731 in Fig. 5B through the LAN interface 710 and a general purpose communication interface 720. The communication signal reached to the USB terminals 531 through 533 communicates in an optical wireless system with the external devices 111 through 118 spaced apart therefrom at an optical LAN receiving unit 1071 and an optical LAN receiving unit 1072 via an optical LAN interface 1061 and the general purpose communication interface 1051 from the USB terminal 1041 of a wired/wireless LAN system 1005 in Fig. 8C. In this case, the communication with the external devices 111 through 118 spaced apart therefrom is also in an optical wireless system.

Other configurations are same as those of First through Second Embodiments. Thus in the present embodiment, in addition to setting of an optical wireless LAN communicable region of in conformity with the site to install the illumination systems and flexible reinstallation of a master or a repeater of an optical wireless LAN corresponding to rearrangement or change in region of machinery on site and the like, it is possible to set a communicable region of an optical wireless LAN in conformity with the site to install the illumination systems and to flexibly perform reinstallation of a master or a repeater of an optical wireless LAN corresponding to rearrangement or change in region of machinery on site and the like even when using the PLC adapters (PLC modems) 261 through 264.

### <Fourth Embodiment>

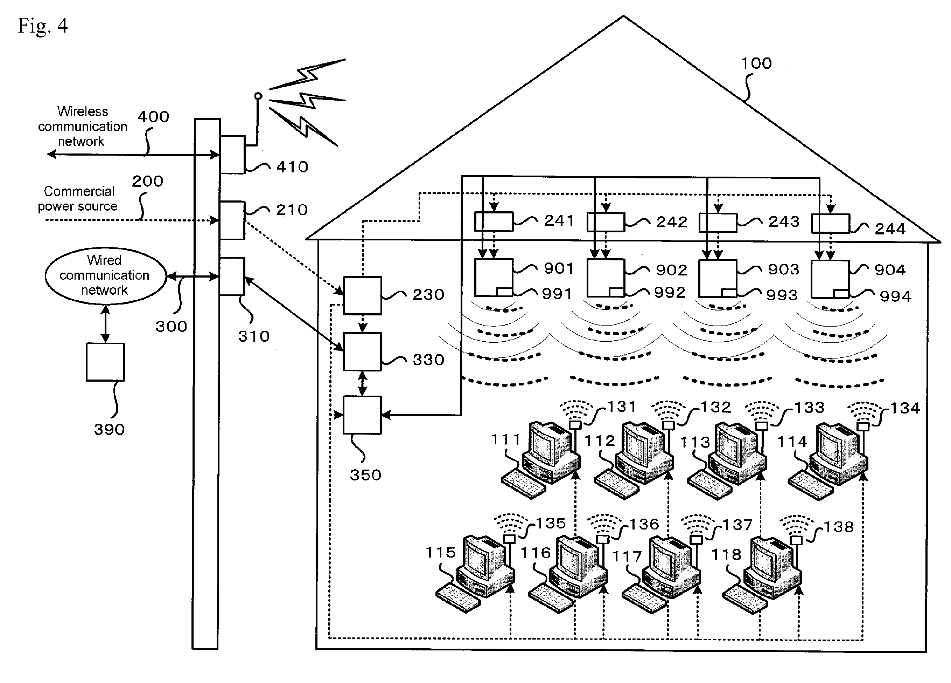

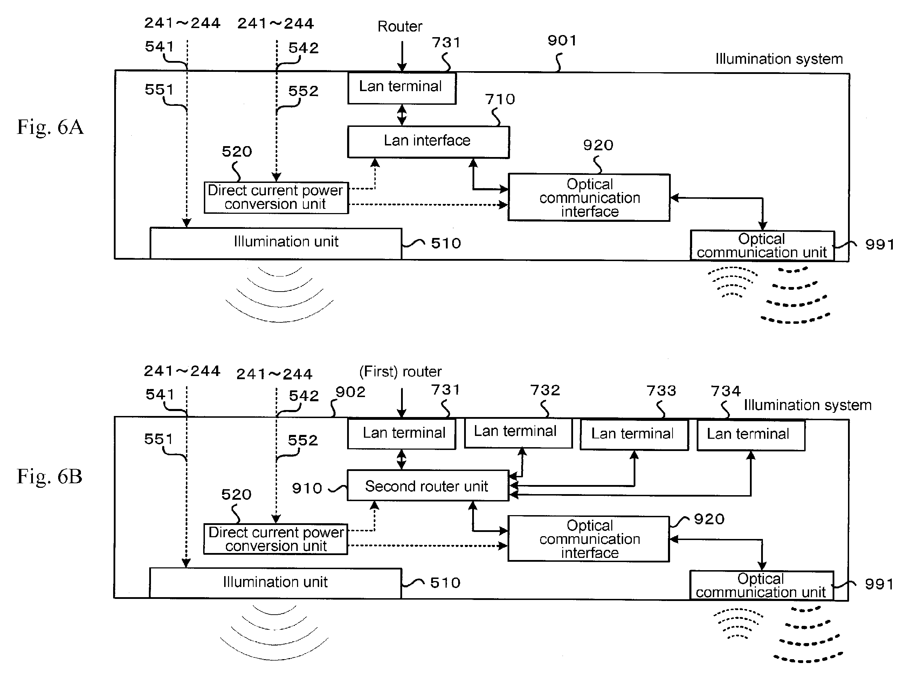

Fourth Embodiment of an illumination system of the present invention is a case of a general purpose terminal of the illumination system being a LAN terminal and of building a master of an optical wireless LAN in illumination systems 901 through 904. A description is given below to an illumination system of Fourth Embodiment using Figs. 4, 6A, and 6B. Same reference numerals are assigned to the configurations in the drawings similar to those in First through Third Embodiments to omit repetitive descriptions.

In Fourth Embodiment illustrated in Fig. 4, the wired LAN router 350 and the illumination systems 901 and 902 are subj ected to wired connection. As illustrated in Fig. 6A, a power from the direct current power conversion unit 520 is supplied to the LAN interface 710 and an optical communication interface 920. An optical communication unit 991 communicates with the external devices 111 through 118 spaced apart therefrom in an optical wireless system. In this case, the communication with the external devices 111 through 118 spaced apart therefrom is also in an optical wireless system.

In a case of Fig. 6B, a power from the direct current power conversion unit 520 is supplied to a second router unit 910 and the optical communication interface 920. Behaviors of the optical communication unit 991 are same as above. The second router unit 910 can divide a LAN communication signal into LAN terminals 731 through 734. By thus providing a plurality of terminals, it is enabled to be connected for communication with a LAN communication system in a system different from the optical communication unit 991, for example. Other configurations are same as those in First through Third Embodiments.

Other configurations are same as those of First through Second Embodiments. Thus in the present embodiment, in addition to setting of an optical wireless LAN communicable region of in conformity with the site to install the illumination systems and flexible reinstallation of a master or a repeater of an optical wireless LAN corresponding to rearrangement or change in region of machinery on site and the like, it is possible not only to send and receive a communication signal to and from the external devices 111 through 118 with the optical communication unit 991 but also to supply an electric power to the LAN communication systems, so that it is enabled to connect, for example, a communication system of a wireless LAN of a different system or an optical wireless LAN.

The present invention is not limited to each of the above embodiments, and it may be provided with a general purpose terminal capable of supplying an electric power to an illumination system using a device emitting a light by a direct current power source and be capable of mounting a LAN communicable communication system to the general purpose terminal. The respective embodiments above may also be used in combination with each other to carry out the present invention.

### DESCRIPTION OF THE REFERENCE NUMERALS

- 100: Building
- 111 through 118: External Device
- 200: Commercial Power Line
- 210: Pole Transformer
- 230: Panelboard
- 241 through 244, 2041 through 2044: Direct Current Power Unit
- 250: PLC Adapter
- 300: Communication Line
- 310: Pole Device
- 330: Line Terminating Equipment
- 340: (Wireless LAN) Router
- 350: Wired LAN Router
- 390: (Remote) Server or another Terminal Unit
- 400: Network
- 410: Base Station
- 501 through 504, 701 through 704,:
- 901 through 904, 2101 through 2104: Illumination System
- 510: Illumination Unit
- 520: Conversion Unit
- 531 through 533: General Purpose Terminal (USB Terminal)
- 541: First Supply Unit of Direct Current Power
- 542: Second Supply Unit of Direct Current Power
- 551: First Wiring Material
- 552: Second Wiring Material
- 601 through 604, 651 through 654,:
- 801 through 804, 991 through 994, 2201 through 2204: Communication System (for LAN)
- 601 through 604: Communication System for Wireless LAN
- 651 through 654, 801 through 804, 991 through 994: Communication System for Optical Wireless LAN
- 710: LAN Interface
- 731 through 734: General Purpose Terminal (LAN Terminal)
- 1001: Wireless LAN Repeater System
- 1002: Wired/Wireless LAN System
- 1003: Wireless/Optical LAN System
- 1004: Wired/Optical LAN System
- 1005: Wired/Wireless LAN System
- 1021: Wireless LAN Interface
- 1041: USB Terminal (Plug)
- 1051: General Purpose Communication Interface
- 1061: Optical LAN Interface
- 1071: Optical LAN Receiving Unit
- 1072: Optical LAN Sending Unit

## Claims

1. An illumination system, comprising an illumination unit using a device emitting a light by having a direct current power supplied thereto, wherein the illumination system includes at least:
a general purpose terminal allowing to be connected to a communication system capable of communicating with an external device spaced apart from the illumination system, the terminal also capable of supplying an electric power to the communication system; and
a conversion unit supplying the direct current power applied to the illumination unit to the general purpose terminal by converting the power to be used in the communication system.

2. The illumination system according to claim 1, wherein
the communication system is configured at least to be capable of communicating by a power within a suppliable specified power value defined with respect to the general purpose terminal.

3. The illumination system according to claim 1 or 2, wherein
the communication system includes a communication interface converting a communication signal to allow communication with the external device provided with a communication system for a LAN (local area network) spaced apart from the illumination system.

4. The illumination system according to any one of claims 1 through 3, wherein
the communication system includes a communication interface converting a communication signal to allow communication with a LAN router.

5. The illumination system according to any one of claims 1 through 4, wherein
the communication system includes a communication interface converting a communication signal to allow communication with both a communication system for a LAN provided in the external device spaced apart from the illumination system and a LAN router.

6. The illumination system according to any one of claims 3 through 5, wherein
the communication interface converts the communication signal to allow communication with a communication system for a wireless LAN.

7. The illumination system according to any one of claims 3 through 5, wherein
the communication interface converts the communication signal to allow communication with a communication system for an optical wireless LAN.

8. The illumination system according to claim 4 or 5, wherein
the LAN router is a wireless LAN router, and the communication interface is capable of communicating with a wireless LAN router.

9. The illumination system according to claim 4 or 5, wherein
the LAN router is a wired LAN router, and the communication interface is capable of communicating with a wired LAN router.

10. The illumination system according to any one of claims 1 through 9, wherein the general purpose terminal is a LAN terminal or a USB terminal.

11. The illumination system according to any one of claims 1 through 9, wherein the illumination system further includes:
a first supply unit of the direct current power to the illumination unit;
a first wiring material conductively connecting the first supply unit and the illumination unit;
a second supply unit of the direct current power supplying a power to the general purpose terminal by being connected closer to a source of a power supply than an ON/OFF switch for a power to the illumination unit; and
a second wiring material conductively connecting the second supply unit with the conversion unit and the general purpose terminal.
